# EUROPEAN PATENT SPECIFICATION

(11) **EP 3 803 475 B1**
(45) Date of publication and mention of the grant of the patent: **27.09.2023**
(21) Application number: 19721007.3
(22) Date of filing: 25.04.2019
(51) Int. Cl.: G01V 8/20, G01V 8/22

(54) **METHOD FOR OPERATING A LIGHT CURTAIN ARRANGEMENT AND LIGHT CURTAIN ARRANGEMENT**
VERFAHREN ZUM BETRIEB EINER LICHTVORHANGANORDNUNG UND LICHTVORHANGANORDNUNG
PROCÉDÉ DE FONCTIONNEMENT D'UN AGENCEMENT DE RIDEAU DE LUMIÈRE ET AGENCEMENT DE RIDEAU DE LUMIÈRE

(30) Priority: 25.05.2018 IT 201800005724
(43) Date of publication of application: 14.04.2021
(73) Proprietor: Omron Corporation, Kyoto-shi, Kyoto 600-8530 (JP)
(72) Inventor: GRANGE, Gianmarco, Kyoto 619-0283 (JP); ROMANO, Enzo, Kyoto 619-0283 (JP)
(74) Representative: Becker, Eberhard
(86) International application number: PCT/IB2019/020014
(87) International publication number: WO 2019/224610

(56) References cited:
- CN-B- 102 279 423
- US-A- 5 408 089
- US-A1- 2003 058 105
- US-A1- 2005 133 702
- US-A1- 2016 043 801

## Description

The present invention relates to a method for operating a light curtain arrangement as well as to a light curtain arrangement for monitoring a safety area.

Light curtain arrangements may be used to monitor a safety area, for example to detect an object moving in the safety area. Such light curtain arrangements can comprise light emitter elements associated with light receiver elements, as well as deflection elements for deflecting light emitted from the light emitter elements towards the associated light receiver elements. If the deflection elements are misaligned with respect to the light emitter elements and/or the light receiver elements, an operating range of the light curtain arrangement, which corresponds to a size of an area that can be monitored by the light curtain arrangement, can undesirably decrease. It is thus desired to maintain a high operating range of the light curtain arrangement.

US 5 408 089 A discloses an apparatus for detecting the presence of an object in a work area. The apparatus comprises a plurality of emitters and detectors. The emitters are tested by individually activating the emitters and observing a signal received by the detectors. Similarly, the detectors are tested by individually activating the detectors and observing a signal received when activating multiple emitters.

However, US 5 408 089 A does not show a deflection element deflecting light emitted along the light paths.

Accordingly, it is one object of the present invention to provide an improved method for operating a light curtain arrangement. Another object of the present invention is the provision of an improved light curtain arrangement for monitoring a safety area.

According to a first aspect, a method for operating a light curtain arrangement for monitoring a safety area is provided. The light curtain arrangement comprises a light receiver element, a plurality of light emitter elements associated with the light receiver element and at least one deflection element placed between the light emitter elements and the light receiver element, wherein the light emitter elements are configured to emit light along respective light paths and the at least one deflection element is configured to deflect the light emitted along the light paths such as to direct it towards the light receiver element. The method comprises the steps of:
sequentially activating the light emitter elements of the plurality of light emitter elements;
for each of the sequentially activated light emitter elements, determining an intensity of a light signal received from the sequentially activated light emitter element by the light receiver element; and
selecting at least one selected light emitter element from the plurality of light emitter elements in accordance with the determined intensities of the light signals.

According to a second aspect, a light curtain arrangement for monitoring a safety area is provided. The light curtain arrangement comprises:
a light receiver element;
a plurality of light emitter elements associated with the light receiver element; and
at least one deflection element placed between the light emitter elements and the light receiver element; wherein
the light emitter elements are configured to emit light along respective light paths; and
the at least one deflection element is configured to deflect the light emitted along the light paths such as to direct it towards the light receiver element; and
the light curtain arrangement further comprises:
   an emitter activation unit for sequentially activating the light emitter elements of the plurality of light emitter elements;
   an emitter intensity determination unit for determining an intensity of a light signal received from the sequentially activated light emitter element by the light receiver element for each of the sequentially activated light emitter elements; and
   an emitter selection unit for selecting at least one selected light emitter element from the plurality of light emitter elements in accordance with the determined intensities of the light signals.

The light curtain arrangement according to the second aspect may be operated according to the method for operating a light curtain arrangement according to the first aspect or according to an embodiment of the first aspect.

The embodiments and features described with reference to the method according to the first aspect apply mutatis mutandis to the light curtain arrangement according to the second aspect.

The plurality of light emitter elements can be associated with the light receiver element and form a group of light elements. When the light emitter elements are activated sequentially, they may emit light one after another. In this case, at a time, only one light beam is emitted by the plurality of light emitter elements. This light beam, which is emitted along the light path, can be deflected towards the single light receiver element by the deflection element. At the light receiver element, the intensity of the light signal received from the one active light emitter element may be determined by measurement.

The light emitter elements may be individually activated one after another by the emitter activation unit, and for each of activated light emitter element, the light signal arriving at the light receiver element may be measured with the emitter intensity determination unit. The intensity of the light signal received at the light receiver element(s) may be representative of the amount of light hitting said light receiver element(s). The intensities of the light signals from the different light emitter elements reaching the light receiver element can be stored and/or compared. In particular, the intensities of the received light signals may vary from one light emitter element to another due to the position differences of the individual light emitter elements with respect to the deflection element.

For example, if a light emitter element is positioned such that the deflection element deflects the light path of the light emitted by said light emitter element exactly to the center of the light receiver element, the intensity of the received light signal will be higher than one of a light emitter element positioned such that the deflection element deflects the light path of the light emitted by said light emitter element to a point away from the center of the light receiver element. In particular, the deflection element deflects the light emitted along the plurality of light paths by the plurality of light emitter elements towards the light receiver element.

At least one light emitter element is selected as a selected light emitter element under consideration of the intensities of the light signals received at the light receiver element by the emitter selection unit. The steps of sequentially activating, of determining the intensity of light signals and of selecting at least one selected light emitter element can be part of a calibration process (calibration mode) of the light curtain arrangement.

The selection of the selected light emitter element(s) can be performed in view of a subsequent monitoring of the safety area using the light curtain arrangement (operation mode). In particular, the selected light emitter element(s) are chosen as the one(s) maximizing the light signal received by the light receiver element to increase an operating range of the light curtain arrangement during use. The operating range may be a size of an area that can be monitored by the light curtain arrangement. Increasing the operating range can allow an increase of the size of the safety area.

In particular, the operating range can be increased without having to physically move the light emitter elements, the light receiver element and/or the detection element. Thereby, the calibration operation can be significantly simplified. Thereby, a method for operating a light curtain arrangement is improved.

The method according to the first aspect further comprises:
monitoring the safety area by only activating the at least one selected light emitter element.

In particular, the safety area is monitored in the operation mode of the light curtain arrangement, which is subsequent to the previously described calibration mode.

According to an embodiment, the step of selecting at least one selected light emitter element comprises:
selecting the N light emitter elements from the plurality of light emitter elements for which the intensities of the light signals detected by the light receiver element are highest, N being an integer and N≥1; and/or
selecting the light emitter element(s) for which the intensities of the light signals received by the light receiver element are equal to or higher than a predetermined emitter intensity threshold.

In particular, the at least one selected light emitter element form the N light emitter element(s) which emit light signals with the highest intensities, as detected at the light receiver element. The at least one selected light emitter element can also be selected in view of whether the light signals they emit are higher than the predetermined emitter intensity threshold or not.

This selection process in particular allows to increase the intensity of the light signals received at the light receiver element in operation mode. Thereby, the operating range can be increased and the method for operating the light curtain arrangement can be improved.

According to a further embodiment, the steps of sequentially activating the light emitter elements, of determining the intensity of the light signal received by the light receiver element and of selecting at least one selected light emitter element from the plurality of light emitter elements are performed iteratively, in particular periodically.

In particular, said three steps are not only performed once, for example at a first configuration of the light curtain arrangement. Rather, they are repeatedly performed, for example every time that the light curtain arrangement is turned on. The three steps may be repeated after a predetermined time has elapsed since a configuration of the light curtain including the three steps. In particular, the three named steps are regularly (periodically) performed.

The light curtain arrangement can hence be reconfigured and/or recalibrated every time the above three steps are performed. Such a reconfiguration and/or of the light curtain device can allow to maintain a high signal intensity received by the light receiver element and hence a high operating range.

According to a further embodiment, the step of sequentially activating the light emitter elements of the plurality of light emitter elements includes activating the plurality of light emitter elements one at a time and one after another.

According to a further embodiment, the method further comprises:
detecting whether the at least one initially selected light emitter element is functioning properly; and, if it is detected that the at least one initially selected light emitter element is not functioning properly:
selecting at least one new selected light emitter element in accordance with the determined intensities of the light signals;
performing a calibration operation comprising the steps of sequentially activating the light emitter elements, of determining the intensity of the light signal received by the light receiver element and of selecting at least one selected light emitter element from the plurality of light emitter elements; and/or
emitting a warning signal.

The misfunction of a light emitter element may be detected at the light receiver element, in particular by detecting a decrease of the intensity of the light signal received at the light receiver element. For example, it is determined that one of the (selected) light emitter elements is not functioning properly when the intensity of the light signal measured at the light receiver element drops below a predetermined misfunction threshold and/or decreases by a predetermined amount as compared to its initial value. The misfunction of the light emitter element can result from the light emitter being broken and/or displaced with respect to its initial position.

When it is detected that one of the light emitter elements is not functioning (operating) properly, some safety measures may be taken. These can include selecting at least one new selected light emitter element based on the intensities of the individual light signals. For example, the newly selected light emitter element can be the light emitter element providing the light signal with the second highest intensity after the initially selected light emitter element.

Thereby, a high intensity of a light signal received at the light receiver element can be maintained, thereby also keeping the operating range high.

Further, by emitting a warning signal in case of a misfunction of a selected light emitter element, a user can be informed of the problem and take appropriate counter measures. These may include checking whether the initially selected light emitter element(s) is/are broken and/or replacing them. Moreover, the user can also initiate a recalibration of the light curtain arrangement by operating the light curtain arrangement in the calibration mode, namely by sequentially activating the light emitter elements, determining the intensities of the light signals received at by light receiver element and selecting new selected light emitter elements based on the determined intensities. Alternatively, such a (re)calibration of the light curtain arrangement may also be initiated automatically by the light curtain arrangement.

According to a third aspect, a method for operating a light curtain arrangement for monitoring a safety area is provided. The light curtain arrangement comprises a light emitter element, a plurality of light receiver elements associated with the light emitter element and at least one deflection element placed between the light emitter element and the light receiver elements, wherein the light emitter element is configured to emit light along a light path and the at least one deflection element is configured to deflect the light emitted along the light path such as to direct it towards the light receiver elements. The method according to the third aspect comprises the steps of:
sequentially activating the light receiver elements of the plurality of light receiver elements;
determining an intensity of a light signal received from the light emitter element by each of the sequentially activated light receiver elements; and
selecting at least one selected light receiver element from the plurality of light receiver elements in accordance with the determined intensities of the light signals.

According to a fourth aspect, a light curtain arrangement for monitoring a safety area is provided. The light curtain arrangement comprises:
a light emitter element;
a plurality of light receiver elements associated with the light emitter element; and
at least one deflection element placed between the light emitter element and the light receiver elements; wherein
the light emitter element is configured to emit light along a light path; and
the at least one deflection element is configured to deflect the light emitted along the light path such as to direct it towards the light receiver elements; and
the light curtain arrangement further comprises:
   a receiver activation unit for sequentially activating the light receiver elements of the plurality of light receiver elements;
   a receiver intensity determination unit for determining an intensity of a light signal received from the light emitter element by each of the sequentially activated light receiver elements; and
   a receiver selection unit for selecting at least one selected light receiver element from the plurality of light receiver elements in accordance with the determined intensities of the light signals.

The light curtain arrangement according to the fourth aspect may be operated according to the method for operating a light curtain arrangement according to the third aspect or according to an embodiment of the third aspect.

The embodiments and features described with reference to the method according to the third aspect apply mutatis mutandis to the light curtain arrangement according to the fourth aspect.

The method according to the third aspect is in particular analog to the method of the first aspect, with the exception that the plurality of light receiver elements associated with one light emitter element are sequentially activated. Thus, the properties and advantages described above with respect to the method and embodiments according to the first aspect also hold for the method and embodiments according to the third aspect.

Similarly, the light curtain arrangement according to the fourth aspect is in particular analog to the light curtain arrangement of the second aspect, with the exception that the plurality of light receiver elements associated with one light emitter element can be sequentially activated. Thus, the properties and advantages described above with respect to the light curtain arrangement and embodiments thereof according to the second aspect also hold for the light curtain arrangement and embodiments thereof according to the fourth aspect.

The plurality of light receiver elements can be associated with the light emitter element and form a group of light elements. When the light receiver elements are activated sequentially, they may receive light one after another. In this case, at a time, only the active light receiver element receives light from the light emitter element. The light beam received by the active light receiver element can be is emitted along the light path and deflected towards the light receiver element by the deflection element. At the light receiver elements, the intensity of the light signal received from the light emitter element may be determined by measurement.

The light receiver elements may be individually activated one after another, for example by the receiver activation unit, and the light signal arriving at the active light receiver element may be measured, for example using the receiver intensity determination unit. Then, the intensities of the light signals received by the different light receiver elements reaching the light receiver element can be stored and/or compared. In particular, the intensities of the received light signals may vary from one light receiver element to another due to the position differences of the individual light receiver elements with respect to the deflection element.

For example, if a light receiver element is positioned such that the deflection element deflects the light path of the light emitted by the light emitter element exactly to the center of said light receiver element, the intensity of the received light signal will be higher than that received at a light emitter element positioned such that the deflection element deflects the light path of the light emitted by the light emitter element to a point away from the center of said light receiver element.

At least one light receiver element is selected as a selected light receiver element under consideration of the intensities of the light signals received at the plurality of light receiver elements by the receiver selection unit. The steps of sequentially activating, of determining the intensity of light signals and of selecting at least one selected light receiver element can be part of the calibration process (calibration mode) of the light curtain arrangement.

The selection of the selected light receiver element(s) can be performed in view of a subsequent monitoring of the safety area using the light curtain arrangement (operation mode). In particular, the selected light receiver element(s) are chosen as the one(s) receiving the highest light signal in order to increase an operating range of the light curtain arrangement during use. Increasing the operating range can allow an increase of the size of the safety area. However, experiments have shown that the calibration using a sequential activation of the light receiver elements leads to less good results in terms of increasing the operating range than the calibration using the sequential activation of the light emitter elements.

The method according to the third aspect further comprises:
monitoring the safety area by only activating the at least one selected light receiver element.

In particular, the safety area is monitored in the operation mode of the light curtain arrangement, which is subsequent to the previously described calibration mode.

According to a further embodiment, in the method according to the third aspect, the step of selecting at least one selected light receiver element comprises:
selecting the N light receiver elements from the plurality of light receiver elements receiving the light signal with the highest intensities, N being an integer and N≥1; and/or
selecting the light emitter element(s) receiving the light signal with an intensity that is equal to or higher than a predetermined receiver intensity threshold.

In particular, the at least one selected light receiver element form the N light receiver element(s) which receive light signals with the highest intensities. The at least one selected light receiver element can also be selected in view of whether the light signals they receive are higher than the predetermined receiver intensity threshold or not.

This selection process in particular allows to increase the intensity of the light signals received at the selected light receiver element in operation mode. Thereby, the operating range can be increased and the method for operating the light curtain arrangement can be improved.

In embodiments, the steps of sequentially activating the light receiver elements, of determining the intensity of the light signal received by the light receiver elements and of selecting at least one selected light receiver element from the plurality of light receiver elements are performed iteratively, in particular periodically.

In particular, said three steps are not only performed once, for example at a first configuration of the light curtain arrangement. Rather, they are repeatedly performed, for example every time that the light curtain arrangement is turned on. The three steps may be repeated after a predetermined time has elapsed since a configuration of the light curtain including the three steps. In particular, the three named steps are regularly (periodically) performed.

The light curtain arrangement can hence be reconfigured and/or recalibrated every time the above three steps are performed. Such a reconfiguration and/or of the light curtain device can allow to maintain a high signal intensity received by the selected light receiver element(s) and hence a high operating range.

According to a further embodiment, the step of sequentially activating the light receiver elements of the plurality of light emitter elements includes activating the plurality of light receiver elements one at a time and one after another.

According to a further embodiment, the method according to the third aspect further comprises:
detecting whether the at least one initially selected light receiver element is functioning properly; and, if it is detected that the at least one initially selected light receiver element is not functioning properly:
selecting at least one new selected light receiver element in accordance with the determined intensities of the light signals;
performing a calibration operation comprising the steps of steps of sequentially activating the light receiver elements, of determining the intensity of the light signal received by the sequentially activated light receiver elements and of selecting at least one selected light receiver element from the plurality of light receiver elements; and/or
emitting a warning signal.

The misfunction of a selected light receiver element may be detected by detecting a decrease of the intensity of the light signal received at said light receiver element. For example, it is determined that one of the (selected) light receiver elements is not functioning properly when the intensity of the measured light signal drops below a predetermined misfunction threshold and/or decreases by a predetermined amount as compared to its initial value. The misfunction of the light receiver element can result from the light receiver being broken and/or displaced with respect to its initial or previous position.

When it is detected that one of the light receiver elements is not functioning (operating) properly, some safety measures may be taken. These can include selecting at least one new selected light receiver element based on the intensities of the individual light signals. For example, the newly selected light receiver element can be the light receiver element receiving the light signal with the second highest intensity after the initially selected light receiver element. Thereby, a high intensity of a light signal received by the light receiver element(s) can be maintained, thereby also keeping the operating range high.

Further, by emitting a warning signal in case of a misfunction of a selected light receiver element, a user can be informed of the problem and take appropriate counter measures. These may include checking whether the initially selected light receiver element(s) is/are broken and/or replacing them. Moreover, the user can also initiate a recalibration of the light curtain arrangement by operating the light curtain arrangement in the calibration mode, namely by sequentially activating the light receiver elements, determining the intensities of the light signals received by the sequentially activated light receiver element and selecting new selected light receiver element(s) based on the determined intensities. Alternatively, such a (re)calibration of the light curtain arrangement may also be initiated automatically by the light curtain arrangement when a misfunction of a selected light receiver element is detected.

The following embodiments and examples hold equally for the method according to the first aspect, for the light curtain arrangement according to the second aspect, for the method according to the third aspect and for the light curtain arrangement according to the fourth aspect.

In embodiments, the light receiver element(s) and the light emitter element(s) are positioned on an active side of the safety area and the at least one deflection element is positioned on a passive side of the safety area, the active side and the passive side being separated by a predetermined distance from one another with the safety area therebetween.

In detail, the light emitter element(s) and the light receiver element(s) can be located on a same side (active side) of the safety area. They are for example aligned along the active side. The deflection element may comprise one or several optical elements such as mirrors, lenses or the like. These optical elements can be located along the light path of the light emitted by the light emitter element(s). The optical elements of the deflection elements can all be provided on the passive side.

The safety area may be an area that can be monitored by the light curtain arrangement. For example, the light curtain arrangement can detect movements and/or the presence of objects within the safety area. In particular, the safety area is an area that can be reached by the light emitted by the light emitter element(s).

The light emitter element(s) may comprise light-emitter diodes (LED). Additionally, each light emitter element may comprise an optical emitter lens. In particular, each diode can be located in the focal plane a corresponding emitter lens. The light emitter element(s) may be fixed on an electronic board, for example by soldering. The light emitter element(s) can be arranged on the active side in a fixed geometric pattern, for example in a line, in two parallel lines, in a rectangle or the like.

The light receiver element(s) may comprise optical sensors, for example photoreceivers. Additionally, each light receiver element may comprise an optical receiver lens. The optical receiver lens can be of the same type as the optical emitter lens. Each optical receiver lens may be placed in the focal plane of a corresponding optical sensor, in particular such as to focus light received from a light emitter element onto an active surface of the light receiver element.

The respective units of the light curtain arrangement of the second and third aspect, for example the emitter activation unit, the emitter intensity determination unit, the emitter selection unit, the receiver activation unit, the receiver intensity determination unit or the receiver selection unit, can be implemented as software and/or hardware. For example, at least some of the units are part of a control unit of the light curtain arrangement. Said control unit may comprise a CPU and/or storing devices for storing the determined light signal intensities.

In some embodiments, the light curtain arrangement according to the second aspect includes several light element groups, each including a light receiver and a plurality of associated light emitter elements. As part of the calibration process, the method according to the first aspect or according to an embodiment thereof can be performed on each of the light element groups individually. Thereby, selected light emitter element(s) can be determined for each group, hence improving the intensity of the light signal received by each light receiver element and improving the overall operating range of the light curtain arrangement.

In some embodiments, the light curtain arrangement according to the fourth aspect includes several light element groups, each including a light emitter and a plurality of associated light receiver elements. As part of the calibration process, the method according to the third aspect or according to an embodiment thereof can be performed on each of the light element groups individually. Thereby, selected light receiver element(s) can be determined for each group, hence improving the intensity of the light signal received by the selected light receiver element(s) and improving the overall operating range of the light curtain arrangement.

In some embodiments, the light curtain arrangement comprises a plurality of light emitter elements and a plurality of light receiver element. In particular, such a light curtain arrangement is a combination of the light curtain arrangements of the second and fourth aspects. It may be operated according to a combination of the methods according to the first and third aspects. In detail, in the configuration mode, each pair of light emitter element and light receiver element can be sequentially activated, and the light signal intensity resulting from the activation of this pair of light emitter element and light receiver element is measured at the active light receiver element. Then, at least one pair of light emitter element and light receiver element can be selected as a selected pair, based on the determined light signal intensities. In particular, during the monitoring operation of the light curtain device, only the selected pair is activated. The selected pair(s) can be selected as the one(s) leading to the highest light signal intensity, whereby the operating range can be increased.

For example, if the light curtain arrangement comprises M light emitter elements and P light receiver elements, a first light receiver element can be activated and used to determine the light signal intensities from each of the M light emitter elements while these are sequentially activated (M and P are both integer numbers with M≥1 and P≥1). Then, the first light receiver element can be deactivated, a second light receiver element can be activated instead, and the M light emitter elements are again sequentially activated while the second light receiver element determines the light signal intensities. This can be repeated for all P light receiver elements, which are thus also sequentially activated in this process. Once this has been repeated for all P light receiver elements, all pairs or combinations of light emitter elements and light receiver elements have been activated and a corresponding light signal intensity has been determined.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a light curtain arrangement according to a first embodiment;
- Fig. 2: shows a method for operating a light curtain arrangement according to a first embodiment;
- Fig. 3: shows an example of a control unit;
- Fig. 4A - 4E: shows a sequential activation of light emitter elements of the light curtain arrangement according to the first embodiment;
- Fig. 5: shows an example of a data table;
- Fig. 6: shows a method for operating a light curtain arrangement according to a second embodiment;
- Fig. 7: shows a light curtain arrangement according to a second embodiment;
- Fig. 8: shows a light curtain arrangement according to a third embodiment; and
- Fig. 9A - 9B: show further embodiments of a light curtain arrangement.

In the Figures, like reference numerals designate like or functionally equivalent elements, unless otherwise indicated.

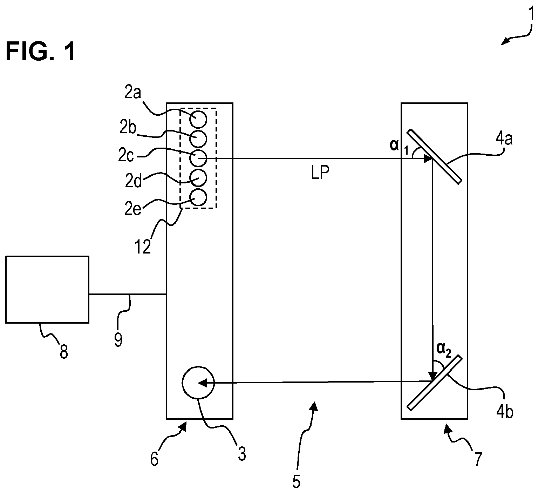

Fig. 1 shows a light curtain arrangement 1 according to a first embodiment. The light curtain arrangement 1 comprises a five light emitter elements 2a - 2e and a light receiver element 3 arranged along a line on an active side 6. On a passive side 7 of the light curtain arrangement 1, two mirrors 4a and 4b forming deflection elements are provided. The active side 6 and passive side 7 are arranged such that a safety area 5 extends therebetween. Moreover, the light curtain arrangement 1 comprises a control unit 8 connected to the active side 6 through a bus 9.

The five light emitter elements 2a - 2e form a plurality of light emitter elements 2a - 2e and are arranged in a light emitter section 12. Each light emitter element 2a - 2e comprises an LED and an emitter lens (not shown), the LED being located in the focal plane of the corresponding emitter lens. The plurality of light emitter elements 2a - 2e is associated with the one light receiver element 3.

Each light emitter element 2a - 2e can emit light along a light path LP. The light is emitted towards the first mirror 4a. The first mirror 4a is orientated such that light emitted by the light emitter elements 2a - 2e strikes it at an angle α₁ of about 45°. The first mirror 4a deflects the light towards the second mirror 4b.

Again, the light strikes the mirror 4b at an angle α₂ of about 45° such that the light is directed towards the light receiver element 3.

Depending on the position of the light emitter element 2a - 2e emitting the light, the exact direction of the light path LP will slightly vary. This means that the light beam strikes the mirrors 4a and 4b at varying angles α₁ and α₂. For example, the angles α₁ and α₂ may vary between 43° and 47°. In addition, the exact direction of the deflected light path LP also depends on the exact orientation and position of the mirrors 4a and 4b. Depending on the orientation and position of the mirrors 4a and 4b as well as on the position of the light emitter element 2a - 2e emitting light, the light beam will not always be reflected towards the light receiver element 3 in the exact same manner and more or less light will hit the light receiver element 3. Thus, depending on which light emitter element 2a - 2e is used, the intensity of the light signal received at the light receiver element 3 varies.

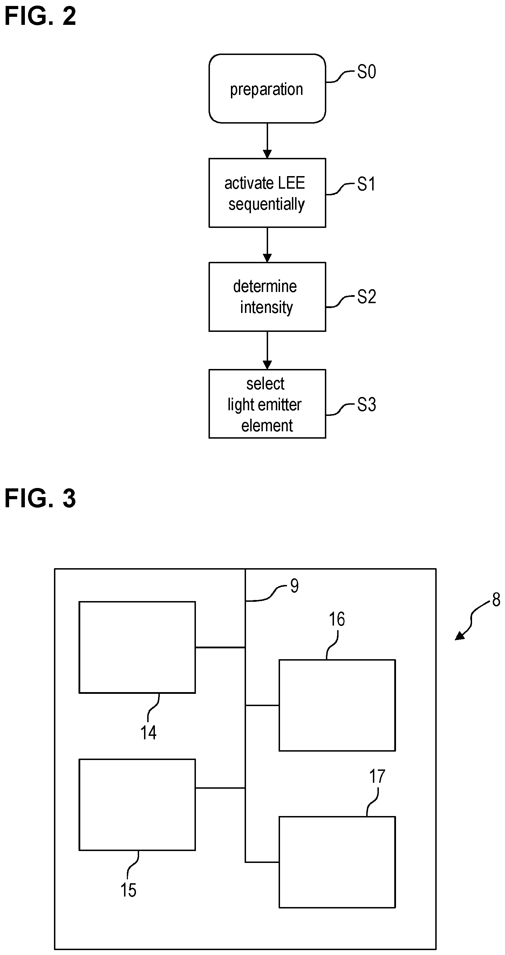

An example of the control unit 8 is shown in Fig. 3. It comprises an emitter activation unit 14, an emitter intensity determination unit 15, an emitter selection unit 16 and a monitoring unit 17. The monitoring unit 17 is optional. The function of the individual units 14 - 17 will be described in the following.

The light curtain arrangement 1 shown in Fig. 1 can be operated according to a method for operating a light curtain arrangement. Fig. 2 shows a first embodiment of such a method.

In a preparation step S0, the light curtain arrangement 1 shown in Fig. 1 is provided. In a step S1, the light emitter elements (LEE) 2a - 2e are activated sequentially. The sequential activation of the light emitter elements 2a - 2e is initiated and controlled by the emitter activation unit 14 of the control unit 8.

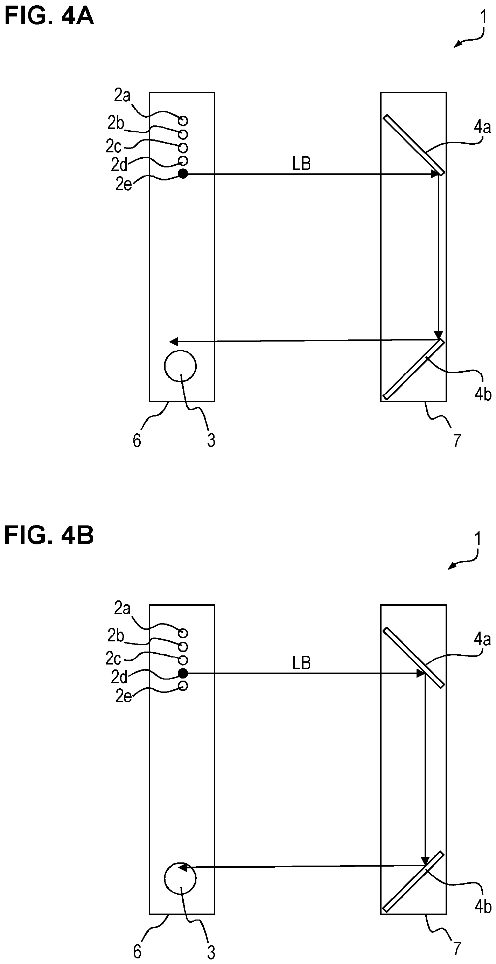

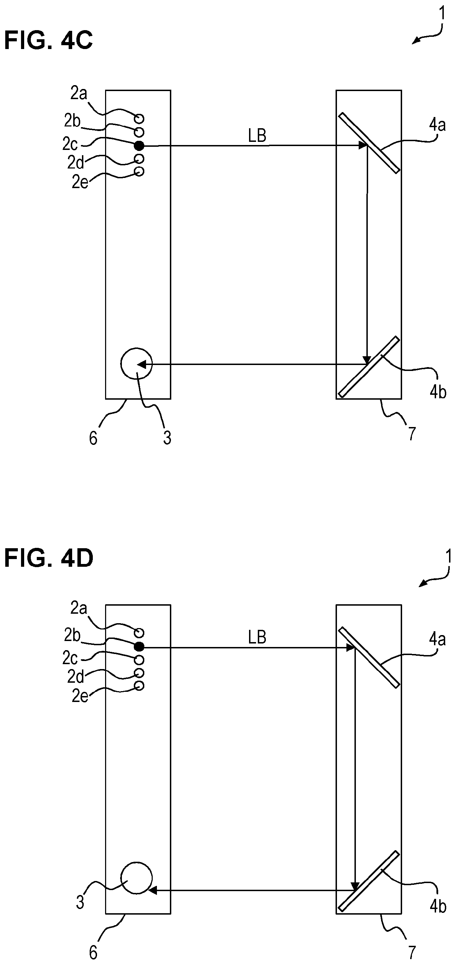

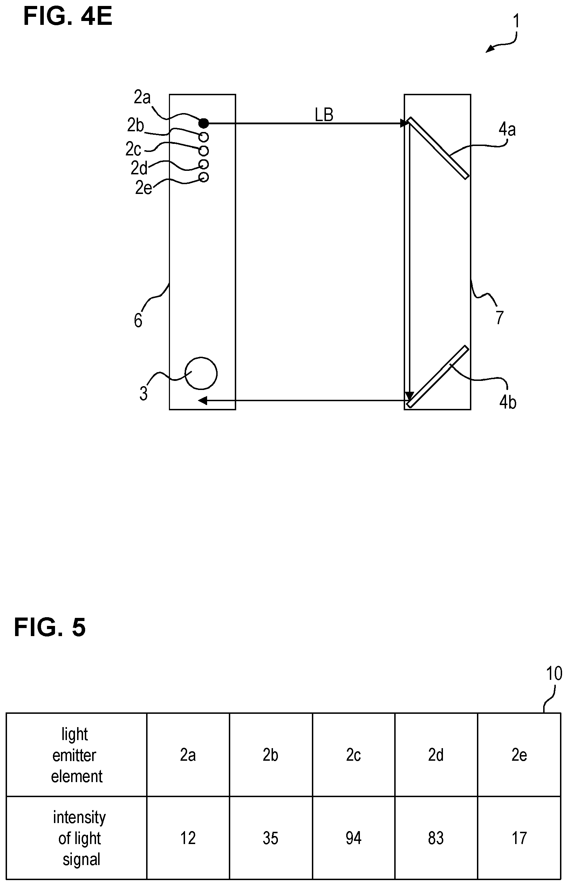

The sequential activation of the light emitter elements 2a - 2e of step S1 is shown in Fig. 4A - Fig. 4E. During the sequential activation of the light emitter elements 2a - 2e, the light emitter elements 2a - 2e are activated one at a time, one after another, in a predefined order. In the example of Fig. 4A - 4E, the light emitter elements 2a - 2e are activated in this order: light emitter element 2e (Fig. 4A), light emitter element 2d (Fig. 4B), light emitter element 2c (Fig. 4C), light emitter element 2b (Fig. 4D) and light emitter element 2a (Fig. 4E). In the Fig. 4A - 4E, the active light emitter element 2a - 2e is colored in black, the inactive ones are white.

During the sequential activation of step S1, the emitter activation unit 14 activates a first light emitter element 2e for a given time, for example ten seconds (Fig. 4A). After the given time has elapsed, the emitter activation unit deactivates the light emitter element 2e and activates a second light emitter 2d for the same given time (Fig. 4B). These steps are repeated until each light emitter element 2a - 2e has been activated. In some embodiments, the sequential activation of the light emitter element 2a - 2e is repeated several times.

In the Figures and in particular in Fig. 4A - 4E, the arrows indicate the main component of the light beams LB emitted by the respective light emitter elements 2a - 2e. The intensity of the emitted light is strongest along this main component direction and the intensity of the emitted light decreases as one moves away from the main component radially. Thus, even if the main component does not directly hit the light receiver element 3 (as it is the case in Fig. 4A, 4D and 4E), the light receiver element 3 will still detect light, but at a lower intensity.

In a step S2, the intensity of a light signal received at the light receiver element 3 is determined for each of the sequentially activated light emitter elements 2a - 2e. In some embodiments, the steps S1 and S2 are performed in parallel. In this case, the light signal intensity is determined while the light emitter element 2a - 2e is active.

The detection of the light signal intensity at step S2 is performed using the emitter intensity determination unit 15 of the control unit 8. The emitter intensity determination unit 15 measures the intensity of the light signal received at the light receiver element 3 while the light emitter elements 2a - 2e are sequentially activated. In the present example, the emitter intensity determination unit 15 is a sensor for sensing the amount of light reaching the light receiver element 3.

The intensity values determined by the emitter intensity determination unit 15 are stored in a data table 10, an example of which is shown in Fig. 5. In the data table 10, the light signal intensity measured for each light emitter element 2a - 2e is stored together with an identification of the corresponding light emitter element 2a - 2e. The emitter intensity determination unit 15 adds the intensity values to the data table 10 one after another as these values are determined.

In Fig. 5, the light signal intensities values can theoretically range from 0 to 100, with 0 indicating that no light signal is received and 100 indicating that a very good light signal (with a high intensity or amplitude) is received at the light receiver element 3. In the example of Fig. 5, the highest light signal intensity (94) is received at the light receiver element 3 when the light emitter element 2c is active. In second position comes the light emitter element 2d with a light signal intensity of 83, then light emitter elements 2b, 2e and 2a in this order. The data table 10 can be stored in a storing unit of the control unit 8 (not shown).

In a step S3, at least one selected light emitter element 2a - 2e is selected in accordance with the light signal intensities determined in step S2. This selection is performed by the emitter selection unit 16 of the control unit 8. The emitter selection unit 16 performs the selection based on a predefined algorithm. In the present case, only the light emitter element 2a - 2e emitting the light signal with the highest intensity as received at the light receiver element 3 is selected. In view of the data table 10, the emitter selection unit 16 here selects the light emitter element 2c as the selected light emitter element 2c.

In alternative embodiments, the selection algorithm of the emitter selection unit 16 may be different. For example, the emitter selection unit 16 can select the two (or N, with N≥1) light emitter elements 2a - 2e providing the light signals with the highest intensity. It could also select those light emitter element(s) providing a light signal intensity that is above a predetermined emitter threshold. For example, if the predetermined emitter threshold took the value 80, the emitter selection unit 16 would select the light emitter elements 2c and 2d as the selected light emitter elements in view of the data in the data table 10.

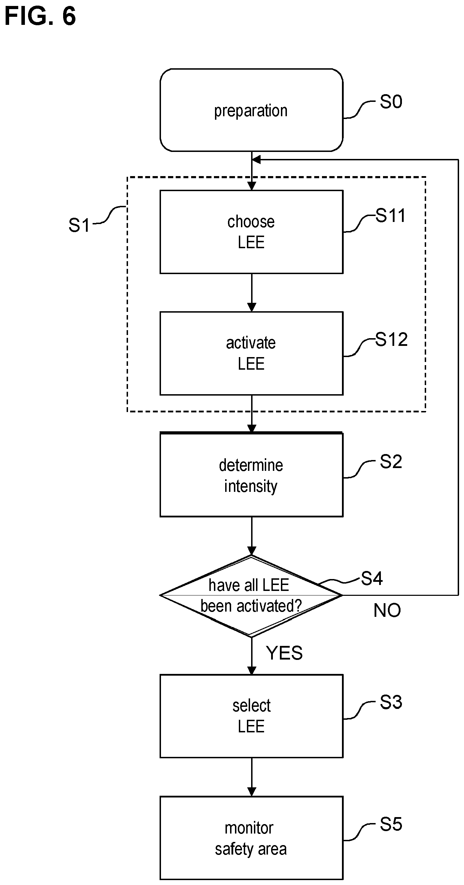

The light curtain arrangement 1 may also be operated according to the method shown in Fig. 6. Fig. 6 shows a method for operating a light curtain arrangement 1 according to a second embodiment. The method of Fig. 6 can be seen as a more detailed description of the method according to Fig. 2.

The step S0 is identical to the step S0 described in view of Fig. 2. In the method according to the second embodiment (Fig. 6), the step S1 comprises the steps S11 and S12. In the step S11, the emitter activation unit 14 chooses one of the light emitter elements 2a - 2e. It then activates the chosen light emitter element 2a - 2e in the step S12.

In the step S2, the emitter intensity determination unit 15 determines the light signal intensity receiver from the chosen light emitter element 2a - 2e at the light receiver element 3. The determination of the light signal intensity is performed as described above in view of step S2.

Then, in a step S4, the emitter activation unit 14 determines whether all light emitter elements 2a - 2e have been activated. As long as the light emitter elements 2a - 2e have not all been activated (answer NO in step S4), the steps S11, S12 and S2 are repeated. At each iteration, the emitter activation unit 14 chooses a new light emitter element 2a - 2e in step S11.

When all light emitter elements 2a - 2e have been activated (answer YES in step S4), the previously described step S3 is performed. The steps S1, S2, S3 and S4 are here part of a calibration process of the light curtain arrangement 1. Said differently, the steps S1 - S4 are performed when the light curtain arrangement 1 is operated in a calibration mode.

The step S5 shown in Fig. 6 corresponds to the operation of the light curtain arrangement 1 in an operation mode that is subsequent to the calibration mode. In detail, in step S5, the light curtain arrangement 1 monitors the safety area 5 by activating only the selected light emitter element 2c selected in step S3. The monitoring of the safety area 5 is performed by the monitoring unit 17.

Since only the light emitter element 2c leading to the highest light signal intensity at the light receiver element 3 is activated in step S6, the operating range of the light curtain arrangement 1 is increased.

The monitoring of the safety area 5 includes detecting the presence of an object or a person in the safety area 5. Indeed, when an object or a person enters the safety area 5, the light path LP is interrupted or at least modified. The intensity of the light signal received at the light receiver element 3 is strongly reduced, indicating that an object or person has entered the safety zone 5. When the light curtain arrangement 1 detects the presence of an object or person in the safety area 5, it emits an alarm. That way, the safety area 5 can be protected and an access to the safety area 5 is monitored.

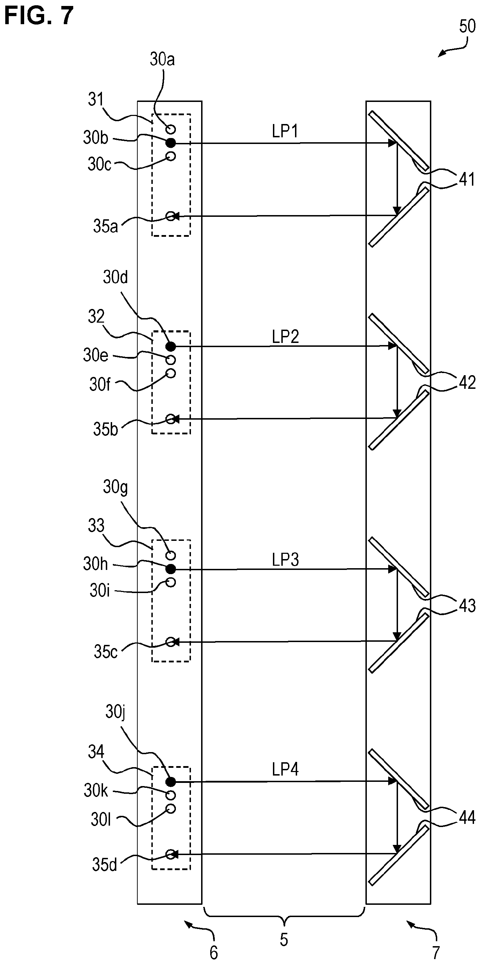

Fig. 7 shows a light curtain arrangement 50 according to a second embodiment. The light curtain arrangement 50 differs from the light curtain arrangement 1 (Fig. 1) mainly in that the active side 6 comprises four light element groups 31 - 34, each having three light emitter elements 30a - 301 and a light receiver element 35a - 35d associated thereto. Correspondingly, on the passive side 7, four mirror pairs are provided as deflection elements 41 - 44.

The light curtain arrangement 50 may comprise a control unit 8 as described above (not shown in Fig. 7).

In a calibration phase of the light curtain arrangement 50, the steps of the methods of Fig. 2 and/or 6 are performed for each light element group 31 - 34. That is, in the light group 31, the three light emitter elements 30a - 30c are sequentially activated (step S1), the intensity of the received light signals is measured (step S2) and at least one of the three light emitter elements 30a - 30c is selected as the selected light emitter element (step S3). In the example of Fig. 7, the light emitter element 30b is selected for the light element group 31.

Those same steps are also individually performed for the light element groups 32 - 34. In the light element group 32, the light element 30d is selected as the selected light emitter element. In the light element group 33, the light element 30h is selected as the selected light emitter element. Further, in the light element group 34, the light element 30j is selected as the selected light emitter element.

Fig. 7 shows the light curtain arrangement 50 in an operation state after the calibration phase. Only the selected light emitter elements 30b, 30d, 30h and 30j are active. They are indicated in black in Fig. 7. The selected light emitter elements 30b, 30d, 30h and 30j emit light along the respective light paths LP1 - LP4.

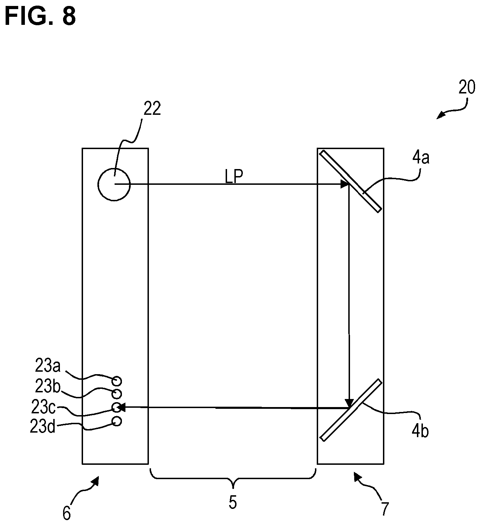

Fig. 8 shows a light curtain arrangement 20 according to a third embodiment. The light curtain arrangement 20 differs from the light curtain arrangement 1 of Fig. 1 in that it comprises only one light emitter element 22 and four light receiver elements 23a - 23d associated thereto. The light curtain arrangement 50 may comprise a control unit 8 as described above (not shown in Fig. 8).

The light curtain arrangement 20 can be operated similarly to the light curtain arrangement 1 of Fig. 1, in particular in view of the calibration. Namely, in the calibration mode, the light receiver elements 23a - 23d are sequentially activated and the intensity of the light signal from the light emitter element 22 reaching the active light receiver element 23a - 23d is determined and stored in a data table 10. Then, in view of the stored intensity values, one or several light receiver elements 23a - 23d are selected as selected light receiver element(s) 23a - 23d. In the operation mode, only the selected light receiver element(s) 23a - 23d will be activated.

The operating range of the light curtain arrangement 50 can be increased by selecting those light receiver elements 23a - 23d at which the highest light signal intensity is observed.

The features described in view of the methods of Fig. 2 and 6 also apply for the light curtain arrangement 20 according to the third embodiment (Fig. 8).

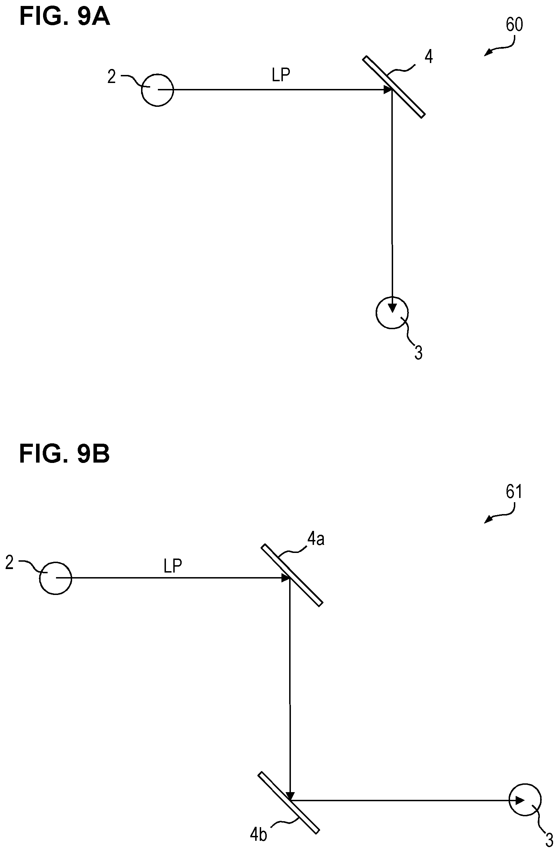

Fig. 9A and 9B show further embodiments of light curtain arrangements 60, 61, which differ from the previously described light curtain arrangements 1, 20, 50 through their geometries.

Fig. 9A shows the light curtain arrangement 60 according to a fourth embodiment. In Fig. 9A, light emitted by a light emitter element 2 (or by several light emitter elements 2) is reflected by a deflection element 4 towards the light receiver element 3 (or towards several light receiver elements 3).

Fig. 9B shows the light curtain arrangement 61 according to a fifth embodiment. In Fig. 9B, light emitted by the light emitter element 2 (or by several light emitter elements 2) is directed to the light receiver element 3 (or towards several light receiver elements 3) by mirrors 4a and 4b forming a deflection element. The light receiver element 3 is located at the other side of the mirrors 4a, 4b as compared to the light emitter element 2.

Although the present invention has been described in accordance with preferred embodiments, it is obvious for the person skilled in the art that modifications are possible in all embodiments. For example, the calibration operation described in view of the methods of Fig. 2 and 6 can be repeated on a regular basis to maintain a high operating range. Further, the features of the light curtain arrangements 1, 20, 50, 60, 61 can be combined, the number of light emitter elements and/or of light receiver elements can be modified and the like. Further, a light curtain arrangement comprising a plurality M of light emitter elements and a plurality P of light receiver elements can be provided, wherein the calibration process involves a sequential activation of each individual pair of light emitter element and light receiver element to determine the pair(s) leading to the highest light signal intensity. Instead of mirrors, lenses can be used as the deflection element.

### REFERENCE NUMERALS

- 1: light curtain arrangement
- 2: light emitter element
- 2a - 2e: light emitter element
- 3: light receiver element
- 4: deflection element
- 4a: mirror
- 4b: mirror
- 5: safety area
- 6: active side
- 7: passive side
- 8: control unit
- 9: bus
- 10: data table
- 12: light emitter section
- 14: emitter activation unit
- 15: emitter intensity determination unit
- 16: emitter selection unit
- 17: monitoring unit
- 20: light curtain arrangement
- 22: light emitter element
- 23a - 23d: light receiver element
- 30a - 301: light emitter element
- 31-34: light element group
- 35a - 35d: light receiver element
- 41-44: deflection element
- 50: light curtain arrangement
- 60: light curtain arrangement
- 61: light curtain arrangement
- α₁: angle
- α₂: angle
- LP: light path
- LP1 - LP4: light path
- S0 - S5: method step
- S11, S12: method step

## Claims

1. A method for operating a light curtain arrangement (1, 20, 50) for monitoring a safety area (5), the light curtain arrangement (1, 20, 50) comprising a light receiver element (3), a plurality of light emitter elements (2a - 2e) associated with the light receiver element (3) and at least one deflection element (4, 4a, 4b) placed between the light emitter elements (2a - 2e) and the light receiver element (3), wherein the light emitter elements (2a - 2e) are configured to emit light along respective light paths (LP) and the at least one deflection element (4, 4a, 4b) is configured to deflect the light emitted along the light paths (LP) such as to direct it towards the light receiver element (3), the method comprising the steps of:
sequentially activating (S1) the light emitter elements (2a - 2e) of the plurality of light emitter elements (2a - 2e);
for each of the sequentially activated light emitter elements (2a - 2e), determining (S2) an intensity of a light signal received from the sequentially activated light emitter element (2a - 2e) by the light receiver element (3);
selecting (S3) at least one selected light emitter element (2a - 2e) from the plurality of light emitter elements (2a - 2e) in accordance with the determined intensities of the light signals; and
monitoring (S5) the safety area (5) by only activating the at least one selected light emitter element (2a - 2e).

2. The method according to claim 1, wherein the step of selecting at least one selected light emitter element (2a - 2e) comprises:
selecting the N light emitter elements (2a - 2e) from the plurality of light emitter elements (2a - 2e) for which the intensities of the light signals detected by the light receiver element (3) are highest, N being an integer and N≥1; and/or
selecting the light emitter element(s) (2a - 2e) for which the intensities of the light signals received by the light receiver element (3) are equal to or higher than a predetermined emitter intensity threshold.

3. The method according to claim 1 or 2, wherein the steps of sequentially activating (S1) the light emitter elements (2a - 2e), of determining (S2) the intensity of the light signal received by the light receiver element (3) and of selecting (S3) at least one selected light emitter element (2a - 2e) from the plurality of light emitter elements (2a - 2e) are performed iteratively, in particular periodically.

4. The method according to any one of claims 1 - 3, further comprising:
detecting whether the at least one initially selected light emitter element (2a - 2e) is functioning properly; and, if it is detected that the at least one initially selected light emitter element (2a - 2e) is not functioning properly:
selecting at least one new selected light emitter element (2a - 2e) in accordance with the determined intensities of the light signals;
performing a calibration operation comprising the steps of steps of sequentially activating (S1) the light emitter elements (2a - 2e), of determining (S2) the intensity of the light signal received by the light receiver element (3) and of selecting at least one selected light emitter element (2a - 2e) from the plurality of light emitter elements (2a - 2e); and/or
emitting a warning signal.

5. A method for operating a light curtain arrangement (1, 20, 50) for monitoring a safety area (5), the light curtain arrangement (1, 20, 50) comprising a light emitter element (22), a plurality of light receiver elements (23a - 23d) associated with the light emitter element (22) and at least one deflection element (4, 4a, 4b) placed between the light emitter element (22) and the light receiver elements (23a - 23d), wherein the light emitter element (22) is configured to emit light along a light path (LP) and the at least one deflection element (4, 4a, 4b) is configured to deflect the light emitted along the light path (LP) such as to direct it towards the light receiver elements (23a - 23d), the method comprising the steps of:
sequentially activating the light receiver elements (23a - 23d) of the plurality of light receiver elements (23a - 23d);
determining an intensity of a light signal received from the light emitter element (22) by each of the sequentially activated light receiver elements (23a - 23d); and
selecting at least one selected light receiver element (23a - 23d) from the plurality of light receiver elements (23a - 23d) in accordance with the determined intensities of the light signals; and
monitoring the safety area (5) by only activating the at least one selected light receiver element (23a - 23d).

6. The method according to claim 5, wherein the step of selecting at least one selected light receiver element (23a - 23d) comprises:
selecting the N light receiver elements (23a - 23d) from the plurality of light receiver elements (23a - 23d) receiving the light signal with the highest intensities, N being an integer and N≥1; and/or
selecting the light emitter element(s) (23a - 23d) receiving the light signal with an intensity that is equal to or higher than a predetermined receiver intensity threshold.

7. The method according to claim 5 or 6, wherein the steps of sequentially activating the light receiver elements (23a - 23d), of determining the intensity of the light signal received by the light receiver elements (23a - 23d) and of selecting at least one selected light receiver element (23a - 23d) from the plurality of light receiver elements (23a - 23d) are performed iteratively, in particular periodically.

8. The method according to any one of claims 5-7, further comprising:
detecting whether the at least one initially selected light receiver element (23a - 23d) is functioning properly; and, if it is detected that the at least one initially selected light receiver element (23a - 23d) is not functioning properly:
selecting at least one new selected light receiver element (23a - 23d) in accordance with the determined intensities of the light signals;
performing a calibration operation comprising the steps of sequentially activating the light receiver elements (23a - 23d), of determining the intensity of the light signal received by the sequentially activated light receiver elements (23a - 23d) and of selecting at least one selected light receiver element (23a - 23d) from the plurality of light receiver elements (23a - 23d); and/or
emitting a warning signal.

9. The method according to one of claims 1- 8, wherein the light receiver element(s) (3, 23a - 23d) and the light emitter element(s) (2a - 2e, 22) are positioned on an active side (6) of the safety area (5) and the at least one deflection element (4, 4a, 4b) is positioned on a passive side (7) of the safety area (5), the active side (6) and the passive side (7) being separated by a predetermined distance from one another with the safety area (5) therebetween.

10. A light curtain arrangement (1, 20, 50) for monitoring a safety area (5), comprising:
a light receiver element (3);
a plurality of light emitter elements (2a - 2e) associated with the light receiver element (3); and
at least one deflection element (4, 4a, 4b) placed between the light emitter elements (2a - 2e) and the light receiver element (3); wherein
the light emitter elements (2a - 2e) are configured to emit light along respective light paths (LP); and
the at least one deflection element (4, 4a, 4b) is configured to deflect the light emitted along the light paths (LP) such as to direct it towards the light receiver element (3); and
the light curtain arrangement (1, 20, 50) further comprises:
an emitter activation unit (14) for sequentially activating the light emitter elements (2a - 2e) of the plurality of light emitter elements (2a - 2e);
an emitter intensity determination unit (15) for determining an intensity of a light signal received from the sequentially activated light emitter element (2a - 2e) by the light receiver element (3) for each of the sequentially activated light emitter elements (2a - 2e); and
an emitter selection unit (16) for selecting at least one selected light emitter element (2a - 2e) from the plurality of light emitter elements (2a - 2e) in accordance with the determined intensities of the light signals; and
a monitoring unit (17) for monitoring the safety area (5) by only activating the at least one selected light emitter element (2a - 2e).

11. A light curtain arrangement (1, 20, 50) for monitoring a safety area (5), comprising:
a light emitter element (22);
a plurality of light receiver elements (23a - 23d) associated with the light emitter element (22); and
at least one deflection element (4, 4a, 4b) placed between the light emitter element (22) and the light receiver elements (23a - 23d); wherein
the light emitter element (22) is configured to emit light along a light path (LP);
the at least one deflection element (4, 4a, 4b) is configured to deflect the light emitted along the light path (LP) such as to direct it towards the light receiver elements (23a - 23d); and
the light curtain arrangement (1, 20, 50) further comprises:
a receiver activation unit for sequentially activating the light receiver elements (23a - 23d) of the plurality of light receiver elements (23a - 23d);
a receiver intensity determination unit for determining an intensity of a light signal received from the light emitter element (22) by each of the sequentially activated light receiver elements (23a - 23d); and
a receiver selection unit for selecting at least one selected light receiver element (23a - 23d) from the plurality of light receiver elements (23a - 23d) in accordance with the determined intensities of the light signals; and
a monitoring unit for monitoring the safety area (5) by only activating the at least one selected light receiver element (23a - 23d).

12. The light curtain arrangement according to claim 10 or 11 for executing the method according to any one of claims 1- 9.

## Patentansprüche

1. Verfahren zum Betreiben einer Lichtvorhanganordnung (1, 20, 50) zum Überwachen eines Sicherheitsbereichs (5), wobei die Lichtvorhanganordnung (1, 20, 50) ein Lichtempfangselement (3), eine Vielzahl von Lichtemissionselementen (2a - 2e), die mit dem Lichtempfangselement (3) verbunden sind und wenigstens ein Ablenkelement (4, 4a, 4b) umfasst, das zwischen den Lichtemissionselementen (2a - 2e) und dem Lichtempfangselement (3) angeordnet ist, wobei die Lichtemissionselemente (2a - 2e) konfiguriert sind, um Licht entlang jeweiliger Lichtpfade (LP) zu emittieren, und das wenigstens eine Ablenkelement (4, 4a, 4b) konfiguriert ist, um das Licht, emittiert entlang der Lichtpfade (LP) abzulenken, um es in Richtung des Lichtempfangselement (3) zu richten, wobei das Verfahren die Schritte umfasst von:
sequentielles Aktivieren (S1) der Lichtemissionselemente (2a - 2e) der Vielzahl von Lichtemissionselementen (2a - 2e);
Bestimmen (S2) einer Intensität eines Lichtsignals, das von dem sequentiell aktivierten Lichtemissionselement (2a - 2e) durch das Lichtempfangselement (3) empfangen wird, für jedes der sequentiell aktivierten Lichtemissionselemente (2a - 2e);
Auswählen (S3) wenigstens eines ausgewählten Lichtemissionselements (2a - 2e) aus der Vielzahl von Lichtemissionselementen (2a - 2e) in Übereinstimmung mit den bestimmten Intensitäten der Lichtsignale; und
Überwachen (S5) des Sicherheitsbereichs (5), indem nur das wenigstens eine ausgewählte Lichtemissionselement (2a - 2e) aktiviert wird.

2. Verfahren gemäß Anspruch 1, wobei der Schritt des Auswählens wenigstens eines ausgewählten Lichtemissionselements (2a - 2e) umfasst:
Auswählen der N Lichtemissionselemente (2a - 2e) aus der Vielzahl der Lichtemissionselemente (2a - 2e), für die die Intensitäten der Lichtsignale, erfasst von dem Lichtempfangselement (3) am höchsten sind, wobei N eine ganze Zahl ist und N≥1; und/oder
Auswählen des/der Lichtemissionselement(e) (2a - 2e), bei denen die Intensitäten der Lichtsignale, empfangen von dem Lichtempfangselement (3) gleich oder höher als ein vorbestimmter Emitter-Intensität Schwellenwert sind.

3. Verfahren gemäß Anspruch 1 oder 2, wobei die Schritte des sequentiellen Aktivierens (S1) der Lichtemissionselemente (2a - 2e), des Bestimmens (S2) der Intensität des Lichtsignals, empfangen von dem Lichtempfangselement (3) und des Auswählens (S3) wenigstens eines ausgewählten Lichtemissionselements (2a - 2e) aus der Vielzahl der Lichtemissionselemente (2a - 2e) iterativ, insbesondere periodisch, durchgeführt werden.

4. Verfahren gemäß einem der Ansprüche 1 bis 3, ferner umfassend:
Erfassen, ob das wenigstens eine anfänglich ausgewählte Lichtemissionselement (2a - 2e) ordnungsgemäß funktioniert; und, wenn erfasst wird, dass das wenigstens eine anfänglich ausgewählte Lichtemissionselement (2a - 2e) nicht ordnungsgemäß funktioniert:
Auswählen wenigstens eines neuen ausgewählten Lichtemissionselements (2a - 2e) in Übereinstimmung mit den bestimmten Intensitäten der Lichtsignale;
Durchführen eines Kalibrierungsvorgangs, der die Schritte des sequentiellen Aktivierens (S1) der Lichtemissionselemente (2a - 2e), des Bestimmens (S2) der Intensität des Lichtsignals (3), empfangen von dem Lichtempfangselement (3) und des Auswählens wenigstens eines ausgewählten Lichtemissionselements (2a - 2e) aus der Vielzahl von Lichtemissionselementen (2a - 2e) umfasst; und/oder
Emittieren eines Warnsignals.

5. Verfahren zum Betreiben einer Lichtvorhanganordnung (1, 20, 50) zum Überwachen eines Sicherheitsbereichs (5), wobei die Lichtvorhanganordnung (1, 20, 50) ein Lichtemissionselement (22), eine Vielzahl von Lichtempfangselementen (23a - 23d), die mit dem Lichtemissionselement (22) verbunden sind und wenigstens ein Ablenkelement (4, 4a, 4b) umfasst, das zwischen dem Lichtemissionselement (22) und den Lichtempfangselementen (23a-23d) angeordnet ist, wobei das Lichtemissionselement (22) konfiguriert ist, um Licht entlang eines Lichtpfads (LP) zu emittieren, und das wenigstens eine Ablenkelement (4, 4a, 4b) konfiguriert ist, um das Licht, emittiert entlang des Lichtpfads (LP) abzulenken, dass es in Richtung der Lichtempfangselemente (23a - 23d) gerichtet wird, wobei das Verfahren die Schritte umfasst von:
sequentielles Aktivieren der Lichtempfangselemente (23a - 23d) der Vielzahl von Lichtempfangselementen (23a - 23d);
Bestimmen einer Intensität eines Lichtsignals, das von dem Lichtemissionselement (22) durch jedes der sequentiell aktivierten Lichtempfangselemente (23a - 23d) empfangen wird; und
Auswählen wenigstens eines ausgewählten Lichtempfangselements (23a - 23d) aus der Vielzahl von Lichtempfangselementen (23a - 23d) in Übereinstimmung mit den bestimmten Intensitäten der Lichtsignale; und
Überwachen des Sicherheitsbereichs (5), indem nur das wenigstens eine ausgewählte Lichtempfangselement (23a - 23d) aktiviert wird.

6. Verfahren gemäß Anspruch 5, wobei der Schritt des Auswählens wenigstens eines ausgewählten Lichtempfangselements (23a - 23d) umfasst:
Auswählen der N Lichtempfangselemente (23a - 23d) aus der Vielzahl von Lichtempfangselementen (23a - 23d), die das Lichtsignal mit den höchsten Intensitäten empfangen, wobei N eine ganze Zahl ist und N≥1; und/oder
Auswählen des/der Lichtemissionselement(e) (23a - 23d), die das Lichtsignal mit einer Intensität empfangen, die gleich oder höher als ein vorbestimmter Empfängerintensitätsschwellenwert ist.

7. Verfahren gemäß Anspruch 5 oder 6, wobei die Schritte des sequentiellen Aktivierens der Lichtempfangselemente (23a - 23d), des Bestimmens der Intensität des Lichtsignals, empfangen von den Lichtempfangselementen (23a - 23d) und des Auswählens wenigstens eines ausgewählten Lichtempfangselements (23a - 23d) aus der Vielzahl der Lichtempfangselementen (23a - 23d) iterativ, insbesondere periodisch, durchgeführt werden.

8. Verfahren gemäß einem der Ansprüche 5 bis 7, ferner umfassend:
Erfassen, ob das wenigstens eine anfänglich ausgewählte Lichtempfangselement (23a - 23d) ordnungsgemäß funktioniert; und, wenn erfasst wird, dass das wenigstens eine anfänglich ausgewählte Lichtempfangselement (23a - 23d) nicht ordnungsgemäß funktioniert:
Auswählen wenigstens eines neuen ausgewählten Lichtempfangselements (23a - 23d) in Übereinstimmung mit den bestimmten Intensitäten der Lichtsignale;
Durchführen eines Kalibrierungsvorgangs, der die Schritte des sequentiellen Aktivierens der Lichtempfangselemente (23a - 23d), des Bestimmens der Intensität des Lichtsignals, empfangen von den sequentiell aktivierten Lichtempfangselementen (23a - 23d) und des Auswählens wenigstens eines ausgewählten Lichtempfangselements (23a - 23d) aus der Vielzahl der Lichtempfangselemente (23a - 23d) umfasst; und/oder
Aussenden eines Warnsignals.

9. Verfahren gemäß einem der Ansprüche 1 bis 8, wobei das/die Lichtempfangselement(e) (3, 23a - 23d) und das/die Lichtemissionselement(e) (2a - 2e, 22) auf einer aktiven Seite (6) des Sicherheitsbereichs (5) und das wenigstens eine Ablenkelement (4, 4a, 4b) auf einer passiven Seite (7) des Sicherheitsbereichs (5) angeordnet werden, wobei die aktive Seite (6) und die passive Seite (7) getrennt sind durch eine vorbestimmte Distanz voneinander mit dem Sicherheitsbereich (5) dazwischen.

10. Lichtvorhanganordnung (1, 20, 50) zum Überwachen eines Sicherheitsbereichs (5), umfassend:
ein Lichtempfangselement (3);
eine Vielzahl von Lichtemissionselementen (2a - 2e), die mit dem Lichtempfangselement (3) verbunden sind; und
wenigstens ein Ablenkelement (4, 4a, 4b), das zwischen den Lichtemissionselementen (2a - 2e) und dem Lichtempfangselement (3) angeordnet ist; wobei
die Lichtemissionselemente (2a - 2e) konfiguriert sind, um Licht entlang entsprechender Lichtpfade (LP) zu emittieren; und
das wenigstens eine Ablenkelement (4, 4a, 4b) konfiguriert ist, um das Licht, emittiert entlang der Lichtpfade (LP) abzulenken, so dass es auf das Lichtempfangselement (3) gerichtet wird; und
die Lichtvorhanganordnung (1, 20, 50) ferner umfasst:
eine Emitter-Aktivierungseinheit (14) zum sequentiellen Aktivieren der Lichtemissionselemente (2a - 2e) der Vielzahl von Lichtemissionselementen (2a - 2e);
eine Emitter-Intensitätsbestimmungseinheit (15) zum Bestimmen einer Intensität eines Lichtsignals, das von dem sequentiell aktivierten Lichtemissionselement (2a - 2e) durch das Lichtempfangselement (3) für jedes der sequentiell aktivierten Lichtemissionselemente (2a - 2e) empfangen wird; und
eine Emitter-Auswahleinheit (16) zum Auswählen wenigstens eines ausgewählten Lichtemissionselements (2a - 2e) aus der Vielzahl von Lichtemissionselementen (2a - 2e) in Übereinstimmung mit den ermittelten Intensitäten der Lichtsignale; und
eine Überwachungseinheit (17) zum Überwachen des Sicherheitsbereichs (5), indem nur das wenigstens eine ausgewählte Lichtemissionselement (2a - 2e) aktiviert wird.

11. Lichtvorhanganordnung (1, 20, 50) zum Überwachen eines Sicherheitsbereichs (5), umfassend:
ein Lichtemissionselement (22);
eine Vielzahl von Lichtempfangselementen (23a - 23d), die mit dem Lichtemissionselement (22) verbunden sind; und
wenigstens ein Ablenkelement (4, 4a, 4b), das zwischen dem Lichtemissionselement (22) und den Lichtempfangselementen (23a - 23d) angeordnet ist; wobei
das Lichtemissionselement (22) konfiguriert ist, dass es Licht entlang eines Lichtpfads (LP) emittiert;
das wenigstens eine Ablenkelement (4, 4a, 4b) konfiguriert ist, um das Licht, emittiert entlang des Lichtpfads (LP) abzulenken, dass es auf die Lichtempfangselemente (23a - 23d) gerichtet wird; und
die Lichtvorhanganordnung (1, 20, 50) ferner umfasst:
eine Empfänger-Aktivierungseinheit zum sequentiellen Aktivieren der Lichtempfangselemente (23a - 23d) aus der Vielzahl von Lichtempfangselementen (23a - 23d);
eine Empfänger-Intensitätsbestimmungseinheit zum Bestimmen einer Intensität eines Lichtsignals, das von dem Lichtemissionselement (22) durch jedes der sequentiell aktivierten Lichtempfangselemente (23a - 23d) empfangen wird; und
eine Empfängerauswahleinheit zum Auswählen wenigstens eines ausgewählten Lichtempfangselements (23a - 23d) aus der Vielzahl der Lichtempfangselemente (23a - 23d) in Übereinstimmung mit den bestimmten Intensitäten der Lichtsignale; und
eine Überwachungseinheit zum Überwachen des Sicherheitsbereichs (5), indem nur das wenigstens eine ausgewählte Lichtempfangselement (23a - 23d) aktiviert wird.

12. Lichtvorhanganordnung gemäß Anspruch 10 oder 11 zum Durchführen des Verfahrens gemäß einem der Ansprüche 1 bis 9.

## Revendications

1. Procédé de fonctionnement d'un agencement de rideau de lumière (1, 20, 50) pour surveiller une zone de sécurité (5), l'agencement de rideau de lumière (1, 20, 50) comprenant un élément récepteur de lumière (3), une pluralité d'éléments émetteurs de lumière (2a - 2e) associés à l'élément récepteur de lumière (3), et au moins un élément de déviation (4, 4a, 4b) placé entre les éléments émetteurs de lumière (2a - 2e) et l'élément récepteur de lumière (3), dans lequel les éléments émetteurs de lumière (2a - 2e) sont configurés pour émettre une lumière le long de trajets de lumière (LP) respectifs et l'au moins un élément de déviation (4, 4a, 4b) est configuré pour dévier la lumière émise le long des trajets de lumière (LP) de manière à la diriger vers l'élément récepteur de lumière (3), le procédé comprenant les étapes suivantes :
l'activation séquentielle (S1) des éléments émetteurs de lumière (2a - 2e) parmi la pluralité d'éléments émetteurs de lumière (2a - 2e) ;
pour chacun des éléments émetteurs de lumière (2a - 2e) séquentiellement activés, la détermination (S2) d'une intensité d'un signal de lumière reçu depuis les éléments émetteurs de lumière (2a - 2e) séquentiellement activés par l'élément récepteur de lumière (3) ;
la sélection (S3) d'au moins un élément émetteur de lumière (2a - 2e) sélectionné parmi la pluralité d'éléments émetteurs de lumière (2a - 2e) en fonction des intensités déterminées des signaux de lumière ; et
la surveillance (S5) de la zone de sécurité (5) par l'activation uniquement de l'au moins un élément émetteur de lumière (2a - 2e) sélectionné.

2. Procédé selon la revendication 1, dans lequel l'étape de la sélection d'au moins un élément émetteur de lumière (2a - 2e) sélectionné comprend :
la sélection des N éléments émetteurs de lumière (2a - 2e) parmi la pluralité d'éléments émetteurs de lumière (2a - 2e) pour lesquels les intensités des signaux de lumière détectés par l'élément récepteur de lumière (3) sont les plus élevées, N étant un entier et N ≥ 1 ; et/ou
la sélection du ou des éléments émetteurs de lumière (2a - 2e) pour lesquels les intensités des signaux de lumière reçus par l'élément récepteur de lumière (3) sont supérieures ou égales à un seuil d'intensité d'émetteur prédéterminé.

3. Procédé selon la revendication 1 ou 2, dans lequel les étapes de l'activation séquentielle (S1) des éléments émetteurs de lumière (2a - 2e), la détermination (S2) de l'intensité du signal de lumière reçu par l'élément récepteur de lumière (3) et la sélection (S3) d'au moins un élément émetteur de lumière (2a - 2e) sélectionné parmi la pluralité d'éléments émetteurs de lumière (2a - 2e) sont réalisées itérativement, en particulier périodiquement.

4. Procédé selon l'une quelconque des revendications 1 à 3, comprenant en outre :
la détection si l'au moins un élément émetteur de lumière (2a - 2e) initialement sélectionné fonctionne correctement ; et, s'il est détecté que l'au moins un élément émetteur de lumière (2a - 2e) initialement sélectionné ne fonctionne pas correctement :
la sélection d'au moins un nouvel élément émetteur de lumière (2a - 2e) sélectionné en fonction des intensités déterminées des signaux de lumière ;
la réalisation d'une opération d'étalonnage comprenant les étapes de l'activation séquentielle (S1) des éléments émetteurs de lumière (2a - 2e), la détermination (S2) de l'intensité du signal de lumière reçu par l'élément récepteur de lumière (3) et la sélection d'au moins un élément émetteur de lumière (2a - 2e) sélectionné parmi la pluralité d'éléments émetteurs de lumière (2a - 2e) ; et/ou
l'émission d'un signal d'avertissement.

5. Procédé de fonctionnement d'un agencement de rideau de lumière (1, 20, 50) pour surveiller une zone de sécurité (5), l'agencement de rideau de lumière (1, 20, 50) comprenant un élément émetteur de lumière (22), une pluralité d'éléments récepteurs de lumière (23a - 23d) associés à l'élément émetteur de lumière (22) et au moins un élément de déviation (4, 4a, 4b) placé entre l'élément émetteur de lumière (22) et les éléments récepteurs de lumière (23a - 23d), dans lequel l'élément émetteur de lumière (22) est configuré pour émettre une lumière le long d'un trajet de lumière (LP) et l'au moins un élément de déviation (4, 4a, 4b) est configuré pour dévier la lumière émise le long du trajet de lumière (LP) de manière à la diriger vers les éléments récepteurs de lumière (23a - 23d), le procédé comprenant les étapes suivantes :
l'activation séquentielle des éléments récepteurs de lumière (23a - 23d) parmi la pluralité d'éléments récepteurs de lumière (23a - 23d) ;
la détermination d'une intensité d'un signal de lumière reçu depuis l'élément émetteur de lumière (22) par chacun des éléments récepteurs de lumière (23a - 23d) séquentiellement activés ; et
la sélection d'au moins un élément récepteur de lumière (23a - 23d) sélectionné parmi la pluralité d'éléments récepteurs de lumière (23a - 23d) en fonction des intensités déterminées des signaux de lumière ; et
la surveillance de la zone de sécurité (5) par l'activation uniquement de l'au moins un élément récepteur de lumière (23a - 23d) sélectionné.

6. Procédé selon la revendication 5, dans lequel l'étape de la sélection d'au moins un élément récepteur de lumière (23a - 23d) sélectionné comprend :
la sélection des N éléments récepteurs de lumière (23a - 23d) parmi la pluralité d'éléments récepteurs de lumière (23a - 23d) recevant le signal de lumière avec les intensités les plus élevées, N étant un entier et N ≥ 1 ; et/ou
la sélection du ou des éléments récepteurs de lumière (23a - 23d) recevant le signal de lumière avec une intensité qui est supérieure ou égale à un seuil d'intensité de récepteur prédéterminé.

7. Procédé selon la revendication 5 ou 6, dans lequel les étapes de l'activation séquentielle des éléments récepteurs de lumière (23a - 23d), la détermination de l'intensité du signal de lumière reçu par les éléments récepteurs de lumière (23a - 23d) et la sélection d'au moins un élément récepteur de lumière (23a - 23d) sélectionné parmi la pluralité d'éléments récepteurs de lumière (23a - 23d) sont réalisées itérativement, en particulier périodiquement.

8. Procédé selon l'une quelconque des revendications 5 à 7, comprenant en outre :
la détection si l'au moins un élément récepteur de lumière (23a - 23d) initialement sélectionné fonctionne correctement ; et, s'il est détecté que l'au moins un élément récepteur de lumière (23a - 23d) initialement sélectionné ne fonctionne pas correctement :
la sélection d'au moins un nouvel élément récepteur de lumière (23a - 23d) sélectionné en fonction des intensités déterminées des signaux de lumière ;
la réalisation d'une opération d'étalonnage comprenant les étapes de l'activation séquentielle des éléments récepteurs de lumière (23a - 23d), la détermination de l'intensité du signal de lumière reçu par les éléments récepteurs de lumière (23a - 23d) et la sélection d'au moins un élément récepteur de lumière (23a - 23d) sélectionné parmi la pluralité d'éléments récepteurs de lumière (23a - 23d) ; et/ou
l'émission d'un signal d'avertissement.

9. Procédé selon l'une quelconque des revendications 1 à 8, dans lequel le ou les éléments récepteurs de lumière (3, 23a - 23d) et le ou les éléments émetteurs de lumière (2a - 2e, 22) sont positionnés sur un côté actif (6) de la zone de sécurité (5) et l'au moins un élément de déviation (4, 4a, 4b) est positionné sur un côté passif (7) de la zone de sécurité (5), le côté actif (6) et le côté passif (7) étant séparés l'un de l'autre d'une distance prédéterminée avec la zone de sécurité (5) entre eux.

10. Agencement de rideau de lumière (1, 20, 50) pour surveiller une zone de sécurité (5), comprenant :
un élément récepteur de lumière (3) ;
une pluralité d'éléments émetteurs de lumière (2a - 2e) associés à l'élément récepteur de lumière (3) ; et
au moins un élément de déviation (4, 4a, 4b) placé entre les éléments émetteurs de lumière (2a - 2e) et l'élément récepteur de lumière (3) ; dans lequel
les éléments émetteurs de lumière (2a - 2e) sont configurés pour émettre une lumière le long de trajets de lumière (LP) respectifs ; et
l'au moins un élément de déviation (4, 4a, 4b) est configuré pour dévier la lumière émise le long des trajets de lumière (LP) de manière à la diriger vers l'élément récepteur de lumière (3) ; et
l'agencement de rideau de lumière (1, 20, 50) comprend en outre :
une unité d'activation d'émetteur (14) pour l'activation séquentielle des éléments émetteurs de lumière (2a - 2e) parmi la pluralité d'éléments émetteurs de lumière (2a - 2e) ;
une unité de détermination d'intensité d'émetteur (15) pour la détermination d'une intensité d'un signal de lumière reçu depuis les éléments émetteurs de lumière (2a - 2e) séquentiellement activés par l'élément récepteur de lumière (3) pour chacun des éléments émetteurs de lumière (2a - 2e) séquentiellement activés ; et
une unité de sélection d'émetteur (16) pour la sélection d'au moins un élément émetteur de lumière (2a - 2e) sélectionné parmi la pluralité d'éléments émetteurs de lumière (2a - 2e) en fonction des intensités déterminées des signaux de lumière ; et
une unité de surveillance (17) pour la surveillance de la zone de sécurité (5) par l'activation uniquement de l'au moins un élément émetteur de lumière (2a - 2e) sélectionné.

11. Agencement de rideau de lumière (1, 20, 50) pour surveiller une zone de sécurité (5), comprenant :
un élément émetteur de lumière (22) ;
une pluralité d'éléments récepteurs de lumière (23a - 23d) associés à l'élément émetteur de lumière (22) ; et
au moins un élément de déviation (4, 4a, 4b) placé entre l'élément émetteur de lumière (22) et les éléments récepteurs de lumière (23a - 23d) ; dans lequel
l'élément émetteur de lumière (22) est configuré pour émettre une lumière le long d'un trajet de lumière (LP) ;
l'au moins un élément de déviation (4, 4a, 4b) est configuré pour dévier la lumière émise le long du trajet de lumière (LP) de manière à la diriger vers les éléments récepteurs de lumière (23a - 23d) ; et
l'agencement de rideau de lumière (1, 20, 50) comprend en outre :
une unité d'activation de récepteur pour l'activation séquentielle des éléments récepteurs de lumière (23a - 23d) parmi la pluralité d'éléments récepteurs de lumière (23a - 23d) ;
une unité de détermination d'intensité de récepteur pour la détermination d'une intensité d'un signal de lumière reçu depuis l'élément émetteur de lumière (22) par chacun des éléments récepteurs de lumière (23a - 23d) séquentiellement activés ; et
une unité de sélection de récepteur pour la sélection d'au moins un élément récepteur de lumière (23a - 23d) sélectionné parmi la pluralité d'éléments récepteurs de lumière (23a - 23d) en fonction des intensités déterminées des signaux de lumière ; et
une unité de surveillance pour la surveillance de la zone de sécurité (5) par l'activation uniquement de l'au moins un élément récepteur de lumière (23a - 23d) sélectionné.

12. Agencement de rideau de lumière selon la revendication 10 ou 11 pour exécuter le procédé selon l'une quelconque des revendications 1 à 9.
